# DEMANDE DE BREVET EUROPEEN

(11) **EP 4 795 928 A1**
(43) Date de publication de la demande: **26.08.2026**
(21) Numéro de dépôt: 26158947.7
(22) Date de dépôt: 17.02.2026
(51) Int. Cl.: A01K 1/00, A01K 1/06

(54) **SYSTÈME DE VERROUILLAGE POUR STRUCTURE AGRICOLE MOBILE ET PROCÉDÉ UTILISANT UN TEL SYSTÈME**

(30) Priorité: 19.02.2025 FR 2501720
(71) Demandeur: Tubex, 45300 Escrennes (FR)
(72) Inventeur: JOURDAIN, Dominique, 45300 ESCRENNES (FR)
(74) Mandataire: Cabinet Beau de Loménie

(57) **Abrégé**

Système de verrouillage (100) pour structure agricole mobile se déplaçant dans une direction longitudinale (X) le long de rails, étant solidaire en déplacement avec la structure agricole mobile, et comprenant un premier cliquet (140) coopérant avec des orifices répartis le long d'un rail, le premier cliquet (140) pouvant pivoter autour d'un premier axe de rotation (R1), le système de verrouillage (100) comprenant un premier levier d'actionnement (110) mobile entre une première position dans laquelle il limite une rotation du premier cliquet (140) dans un premier sens de rotation et une deuxième position autorisant la rotation du premier cliquet (140) dans le premier sens de rotation, et un deuxième levier d'actionnement (120) mobile entre une première position dans laquelle il limite une rotation du premier cliquet (140) dans un deuxième sens de rotation et une deuxième position autorisant la rotation du premier cliquet (140) dans le deuxième sens de rotation.

## Description

### Domaine Technique

Le présent exposé concerne un système de verrouillage pour structure agricole mobile, notamment pour barrière agricole de poussée de couloir de contention pour bétail, et un procédé de verrouillage utilisant un tel système.

### Technique antérieure

Dans le domaine de l'élevage, notamment des bovins, ovins, mais pas uniquement, il est connu d'utiliser des structures mobiles nécessitant des systèmes de verrouillage. Typiquement, des systèmes de contention formant un couloir de passage pour le bétail permettent aux éleveurs de canaliser les animaux et de les déplacer dans une direction donnée et vers une zone souhaitée, par exemple une zone de tri ou d'intervention. Pour ce faire, un tel couloir de contention comprend typiquement des parois latérales formant le couloir et empêchant les animaux de s'échapper, et une barrière de poussée transversale par rapport aux parois latérales et mobile par rapport à celles-ci. Les parois latérales peuvent par exemple comprendre des rails le long desquels des extrémités respectives de la barrière transversale peuvent coulisser. La barrière de poussée peut notamment être actionnée par l'éleveur qui, en faisant coulisser celle-ci le long des rails des parois latérales, pousse les animaux dans la direction souhaitée.

Afin d'assurer la sécurité d'utilisation pour l'éleveur, par exemple dans le cas d'un mouvement brusque d'un animal contre la barrière et dans la direction de l'éleveur, il est préférable de mettre en place un système de verrouillage de la barrière. Un tel système de verrouillage permet de verrouiller la barrière de poussée en des points donnés le long des rails, notamment par paliers, empêchant celle-ci de se déplacer davantage le long des rails. Typiquement, un système de verrouillage peut comprendre une poignée d'actionnement permettant de déplacer des taquets de verrouillage pour les insérer dans des orifices présents le long des rails, ou les extraire de ces orifices.

Toutefois les systèmes de verrouillage existants ne sont pas entièrement satisfaisants. Certains systèmes comprennent par exemple un ressort de rappel poussant un taquet dans des orifices du rail au cours du déplacement de la barrière. Dans ce cas, il est nécessaire pour l'éleveur de maintenir une poignée d'actionnement tirée vers le bas pour maintenir les taquets en positions d'extractions des orifices afin d'éviter un verrouillage de la barrière lorsque celui-ci n'est pas nécessaire. Un tel système est peu commode pour l'éleveur et le contraint à pousser la barrière d'une main, et à maintenir la poignée de l'autre main, ce qui l'empêche donc d'atteindre manuellement les animaux de l'autre côté de la barrière si nécessaire (pour les pousser ou les déplacer manuellement par exemple).

A l'inverse, si l'éleveur ne maintient pas la poignée, le verrouillage se fait automatiquement à chaque palier, ce qui oblige l'éleveur à actionner la poignée à chaque palier pour déverrouiller la barrière et poursuivre sa poussée, et ne permet donc pas une utilisation en continue.

D'autres systèmes requièrent à l'inverse l'actionnement d'une poignée pour insérer des taquets dans les orifices du rail. Dans ce cas, il est nécessaire pour l'éleveur de repérer, lors du déplacement de la barrière de poussée, la position des orifices le long des rails afin de stopper la barrière en face de ces orifices et d'actionner alors la poignée pour insérer les taquets dans les orifices lorsqu'un verrouillage de la barrière est souhaité. Avec un tel fonctionnement, l'attention de l'éleveur est détournée des animaux, et une sécurité suffisante n'est pas assuré pour ce dernier pendant la poussée.

Il existe donc un besoin pour un système de verrouillage permettant d'améliorer la simplicité de manipulation pour l'éleveur, et d'améliorer la sécurité d'utilisation.

### Exposé de l'invention

Le présent exposé concerne un système de verrouillage pour structure agricole mobile apte à se déplacer dans une direction longitudinale le long d'au moins un premier rail, le système de verrouillage étant configuré pour être solidaire en déplacement avec la structure agricole mobile, et comprenant un premier cliquet apte à coopérer avec des orifices répartis le long du premier rail, le premier cliquet étant configuré pour pivoter autour d'un premier axe de rotation, le système de verrouillage comprenant un premier levier d'actionnement mobile entre une première position dans laquelle il est apte à limiter une rotation du premier cliquet dans un premier sens de rotation et une deuxième position autorisant la rotation du premier cliquet dans le premier sens de rotation, et un deuxième levier d'actionnement mobile entre une première position dans laquelle il est apte à limiter une rotation du premier cliquet dans un deuxième sens de rotation et une deuxième position autorisant la rotation du premier cliquet dans le deuxième sens de rotation.

En d'autres termes, lorsque le premier levier d'actionnement est dans la première position, et le deuxième levier d'actionnement est dans la deuxième position, un déplacement de la structure agricole mobile le long du ou des rail(s) dans un premier sens de déplacement est possible, alors qu'un déplacement de ladite structure dans un deuxième sens de déplacement opposé au premier sens est empêché, du fait de la limitation de la rotation du premier cliquet dans le premier sens de rotation et de sa libre rotation dans le deuxième sens de rotation.

En outre, lorsque le premier levier d'actionnement est dans la deuxième position, et le deuxième levier d'actionnement est dans la première position, un déplacement de la structure agricole mobile le long du ou des rail(s) dans le deuxième sens de déplacement est possible, alors qu'un déplacement de ladite structure dans le premier sens de déplacement est empêché, du fait de la limitation de la rotation du premier cliquet dans le deuxième sens de rotation et de sa libre rotation dans le premier sens de rotation.

On comprend ainsi que le premier cliquet peut être sélectivement verrouillé, par l'intermédiaire du premier et du deuxième levier d'actionnement, dans une première configuration (premier levier dans sa première position et deuxième levier dans sa deuxième position) permettant de tirer la structure agricole mobile dans un sens (par exemple vers l'arrière), tout en bloquant son déplacement dans le sens opposé (par exemple vers l'avant), ou dans une deuxième configuration (premier levier dans sa deuxième position et deuxième levier dans sa première position) permettant de pousser la structure agricole mobile vers l'avant, tout en bloquant son déplacement vers l'arrière.

Ainsi, dans le cas où la structure agricole mobile est par exemple une barrière de poussée de couloir de contention, après avoir choisi la position du premier et du deuxième levier d'actionnement, l'éleveur peut donc pousser la structure agricole mobile vers l'avant, ou la tirer vers l'arrière, en continu, c'est-à-dire sans devoir actionner le verrouillage à chaque palier ou libérer le cliquet à chaque palier, et en toute sécurité, tout en ayant ses deux mains libres pour pouvoir à la fois pousser (ou tirer) la structure agricole mobile et agir sur les animaux présents de l'autre côté de la structure agricole mobile. Le système de verrouillage permet ainsi d'améliorer la sécurité de l'éleveur, tout en permettant une utilisation pratique et efficace.

Dans certains modes de réalisation, le premier cliquet comprend un premier rebord longitudinal et un deuxième rebord longitudinal, le premier levier d'actionnement étant apte à limiter la rotation du premier cliquet dans le premier sens de rotation par contact du premier rebord contre le premier levier d'actionnement lors de la rotation dans le premier sens de rotation, et le deuxième levier d'actionnement étant apte à limiter la rotation du premier cliquet dans le deuxième sens de rotation par contact du deuxième rebord contre le deuxième levier d'actionnement lors de la rotation dans le deuxième sens de rotation.

Dans certains modes de réalisation, le premier cliquet comprend une portion amincie apte à pénétrer au moins en partie dans les orifices du premier rail, et une portion élargie apte à coopérer avec une extrémité du premier levier d'actionnement et comprenant le premier rebord longitudinal et le deuxième rebord longitudinal.

Dans certains modes de réalisation, le premier et le deuxième levier d'actionnement sont aptes à être fixés de manière mobile à un portique portant la structure agricole mobile, et sont aptes à passer de leur première position à leur deuxième position en pivotant par rapport au portique, autour d'un deuxième axe de rotation transversal au premier axe de rotation du premier cliquet.

Dans certains modes de réalisation, le système de verrouillage comprend un support fixe comprenant une base fixe apte à être fixée à un premier montant longitudinal du portique, et une plaque de maintien fixée à la base, une extrémité du premier levier d'actionnement étant logée dans un espace formé entre la plaque de maintien et la base, la plaque de maintien étant apte à limiter un mouvement ascendant de l'extrémité du premier levier d'actionnement.

Dans certains modes de réalisation, le système de verrouillage est apte à se déplacer dans la direction longitudinale à la fois le long du premier rail et le long d'un deuxième rail parallèle au premier rail, le système de verrouillage comprenant un deuxième cliquet apte à coopérer avec des orifices répartis le long du deuxième rail, le deuxième cliquet étant configuré pour pivoter autour du premier axe de rotation, le premier levier d'actionnement étant apte à limiter une rotation du deuxième cliquet dans le premier sens de rotation lorsqu'il est dans sa première position, et à autoriser la rotation du deuxième cliquet dans le premier sens de rotation lorsqu'il est dans sa deuxième position, et le deuxième levier d'actionnement étant apte à limiter une rotation du deuxième cliquet dans le deuxième sens de rotation lorsqu'il est dans sa première position, et à autoriser la rotation du deuxième cliquet dans le deuxième sens de rotation lorsqu'il est dans sa deuxième position.

Dans certains modes de réalisation, le premier levier et le deuxième levier d'actionnement comprennent chacun une portion d'actionnement manuel et une portion transversale apte à coopérer à la fois avec le premier cliquet et le deuxième cliquet lorsque le premier et/ou le deuxième levier d'actionnement est dans sa première position, la portion d'actionnement manuel étant fixée à la portion transversale via une première liaison pivot.

Dans certains modes de réalisation, la portion transversale comprend un premier bras de blocage apte à coopérer avec le premier cliquet lorsque le premier et/ou le deuxième levier d'actionnement est dans sa première position, un deuxième bras de blocage apte à coopérer avec le deuxième cliquet lorsque le premier et/ou le deuxième levier d'actionnement est dans sa première position, le premier et le deuxième bras de blocage étant liés entre eux via un bras intermédiaire fixé à chacun du premier et du deuxième bras de blocage via une deuxième et une troisième liaison pivot respectivement.

Dans certains modes de réalisation, un passage du premier et/ou du deuxième levier d'actionnement de sa première position à sa deuxième position, par un actionnement de la portion d'actionnement manuel dans un premier sens, entraîne un déplacement transversal du premier bras de blocage et du deuxième bras de blocage impliquant un rapprochement de ces derniers l'un de l'autre, et un passage du premier et/ou du deuxième levier d'actionnement de sa deuxième position à sa première position, par un actionnement de la portion d'actionnement manuel dans un deuxième sens opposé au premier sens, entraîne un déplacement transversal du premier bras de blocage et du deuxième bras de blocage impliquant un éloignement de ces derniers l'un de l'autre.

Le présent exposé concerne également un ensemble comprenant deux rails parallèles entre eux, une structure agricole mobile, un portique portant la structure agricole mobile et étant mobile en translation le long des rails dans une direction longitudinale, et un système de verrouillage selon l'un quelconque des modes de réalisation précédents, le premier cliquet étant fixé de manière mobile en rotation par rapport audit portique.

Dans certains modes de réalisation, dans lequel le portique comprend un premier montant longitudinal coopérant avec l'un des deux rails en étant apte à translater par rapport audit rail, le premier et le deuxième levier d'actionnement étant fixés de manière mobile à un deuxième montant longitudinal parallèle au premier montant longitudinal, une base fixe, une plaque de maintien et le premier cliquet étant fixés audit premier montant horizontal.

Dans certains modes de réalisation, le bras intermédiaire est fixé de manière mobile au deuxième montant longitudinal, via une quatrième liaison pivot.

Dans certains modes de réalisation, la structure agricole mobile est une barrière de poussée de couloir de contention.

Le présent exposé concerne également un procédé de verrouillage d'une structure agricole mobile utilisant un système de verrouillage selon l'un quelconque des modes de réalisation précédents, le procédé comprenant :
- le positionnement du premier levier d'actionnement dans sa première position et du deuxième levier d'actionnement dans sa deuxième position de manière à permettre un déplacement de la structure agricole mobile le long du rail dans une direction longitudinale, dans un premier sens de déplacement et à bloquer son déplacement dans un deuxième sens de déplacement opposé au premier sens, ou
- le positionnement du premier levier d'actionnement dans sa deuxième position et du deuxième levier d'actionnement dans sa première position de manière à permettre le déplacement de la structure agricole mobile le long du rail dans le deuxième sens de déplacement et à bloquer son déplacement dans le premier sens, ou
- le positionnement du premier levier d'actionnement et du deuxième levier d'actionnement dans leur première position de manière à bloquer le déplacement de la structure agricole mobile le long du rail à la fois dans le premier sens et dans le deuxième sens.

Les caractéristiques et avantages précités, ainsi que d'autres, apparaîtront à la lecture de la description détaillée qui suit, d'un exemple de réalisation du système de verrouillage. Cette description détaillée fait référence aux dessins annexés.

### Brève description des dessins

Les dessins annexés sont schématiques et visent avant tout à illustrer les principes de l'exposé. Sur ces dessins, d'une figure à l'autre, des éléments (ou parties d'élément) identiques sont repérés par les mêmes signes de référence.
[Fig. 1] La figure 1 représente une vue globale en perspective d'un ensemble selon le présent exposé, notamment un couloir de contention ;
[Fig. 2] La figure 2 représente une vue en perspective d'un portique mobile de l'ensemble de la figure 1 ;
[Fig. 3] La figure 3 représente une vue partielle de face du portique de la figure 2 ;
[Fig. 4] La figure 4 représente une vue partielle en perspective du portique de la figure 2, les plaques de maintien étant masquées ;
[Fig. 5] La figure 5 représente une vue rapprochée en perspective d'une partie de l'ensemble de la figure 1, notamment un système de verrouillage selon le présent exposé dans une première configuration ;
[Fig. 6] La figure 6 représente une vue rapprochée en perspective d'une partie de l'ensemble de la figure 1, notamment un système de verrouillage selon le présent exposé dans une deuxième configuration ;
[Fig. 7] La figure 7 représente une vue rapprochée en perspective d'une partie de l'ensemble de la figure 1, notamment un système de verrouillage selon le présent exposé dans une troisième configuration ;
[Fig. 8] La figure 8 représente le système de verrouillage de la figure 5, sous un angle différent ;
[Fig. 9] La figure 9 représente le système de verrouillage de la figure 6, sous un angle différent ;
[Fig. 10] La figure 10 représente le système de verrouillage de la figure 7, sous un angle différent.

### Description des modes de réalisation

Afin de rendre plus concret l'exposé, un exemple de système de verrouillage est décrit en détail ci-après, en référence aux dessins annexés. Il est rappelé que l'invention ne se limite pas à cet exemple.

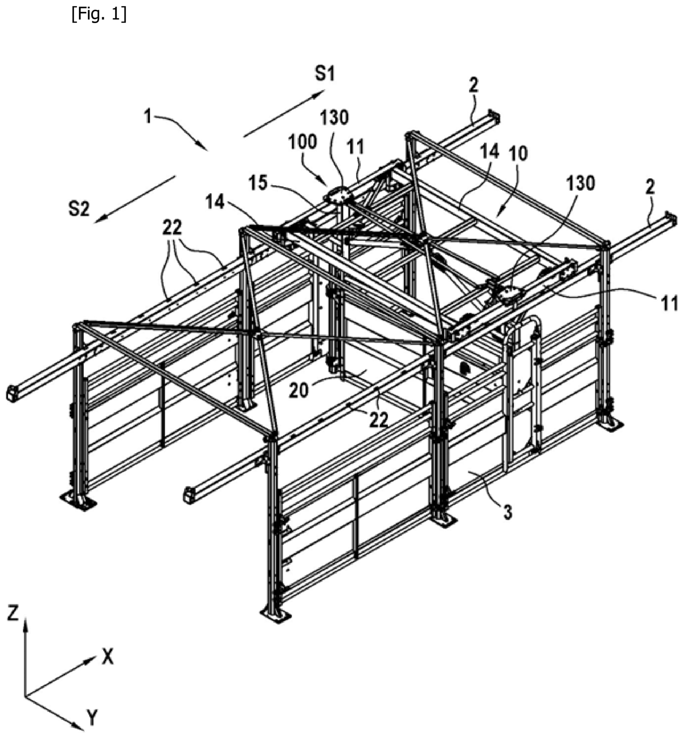

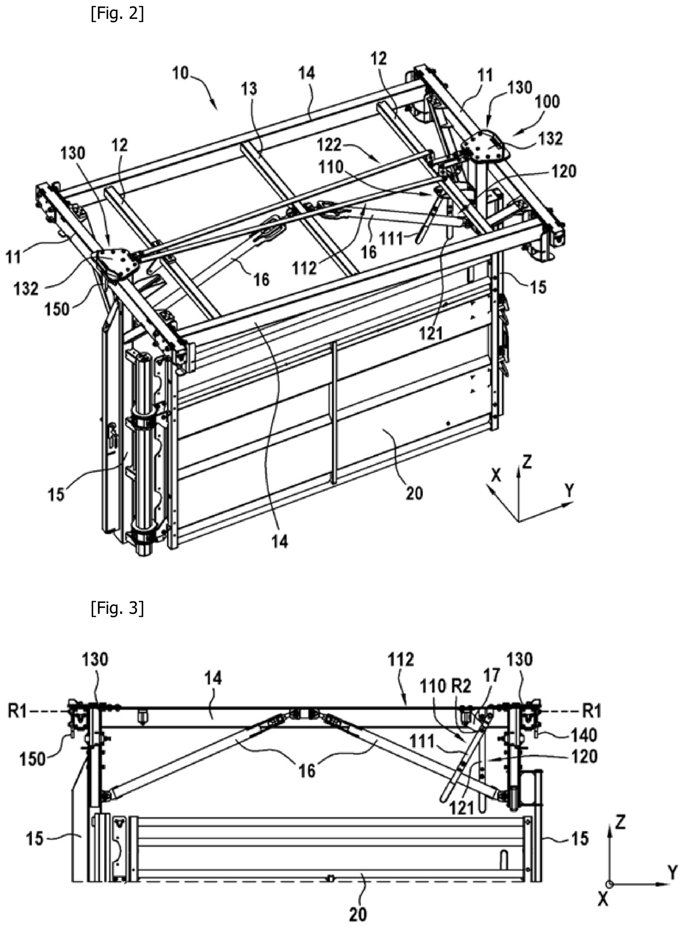

La figure 1 représente une vue en perspective d'un ensemble 1 selon l'invention, comprenant un portique 10 mobile en translation, dans un repère XYZ, où X est une direction longitudinale, Y une direction transversale, et Z une direction verticale. La figure 2 est une vue en perspective du portique 10 seul, et la figure 3 est une vue de face d'une portion du portique 10 de la figure 2 dans une vue de face selon la direction longitudinale X, et perpendiculaire au plan YZ.

**On** comprendra que dans la suite de la description, les termes « supérieur » et « inférieur » ou « haut » et « bas » sont définis par rapport à la direction verticale Z, les termes « intérieur » et « extérieur » et leurs dérivés sont définis par rapport à la direction transversale Y, et les termes « avant » et « arrière » ou « amont » et « aval » sont définis par rapport à la direction longitudinale X, l'expression « vers l'avant » étant équivalente à « vers l'aval » et l'expression « vers l'amont » étant équivalente à « vers l'arrière ».

Dans l'exemple décrit ici, l'ensemble 1 est un couloir de contention permettant de contenir des animaux tels que du bétail et de les pousser dans une direction souhaitée, et la structure agricole mobile est une barrière de poussée 20 portée par le portique 10. Toutefois, le système de verrouillage décrit plus bas ne se limite pas à cette application, et peut également être utilisé sur d'autres dispositifs.

L'ensemble 1 comprend deux parois latérales 3 parallèles l'une avec l'autre, s'étendant dans la direction longitudinale X, et formant entre elles le couloir de contention. Au sommet de chaque paroi latérale 3 est disposé un rail 2 s'étendant dans la direction longitudinale X le long de la paroi latérale 3. On comprend donc que les rails 2 sont disposés en hauteur, par exemple à 2 mètres de hauteur environ, de manière à surplomber les parois latérales 3. Chaque rail 2 comprend, sur sa face supérieure, une pluralité d'orifices 22 répartis à intervalles réguliers le long du rail 2 dans la direction longitudinale X.

Les rails 2 et les parois latérales 3 constituent les parties fixes de l'ensemble 1, les parois latérales 3 étant par ailleurs fixées au sol. L'ensemble 1 comprend en outre un portique 10, mobile en translation le long des rails 2 dans la direction longitudinale X. Le portique 10 porte la barrière 20 se déplaçant également dans la direction longitudinale X conjointement au portique 10, et permettant, lorsqu'elle est fermée, de pousser le bétail dans une direction souhaitée, par exemple vers l'avant, sous l'action d'un utilisateur, notamment d'un éleveur, situé de l'autre côté de la barrière 20 et poussant manuellement sur celle-ci.

Typiquement, le portique 10 comprend une pluralité de montants horizontaux longitudinaux 11, 12, 13, deux montants horizontaux transversaux 14, et deux montants verticaux 15. Plus précisément, un premier montant longitudinal 11, s'étendant dans la direction longitudinale X, est disposé à chaque extrémité extérieure du portique 10 dans la direction transversale Y. Chaque premier montant longitudinal 11 est configuré pour coopérer avec un rail 2 par un contact coulissant, par exemple via un rouleau (non représenté) porté par le premier montant longitudinal 11 et roulant le long d'une face latérale intérieure du rail 2.

Un deuxième montant longitudinal 12 est disposé parallèlement à chaque un premier montant longitudinal 11, vers l'intérieur par rapport à celui-ci, et s'étendant parallèlement à celui-ci. Un troisième montant longitudinal 13 peut également être disposé entre les deux deuxièmes montants longitudinaux 12, sensiblement au centre du portique 10 par rapport à la direction transversale Y, afin d'améliorer davantage la tenue mécanique du portique 10.

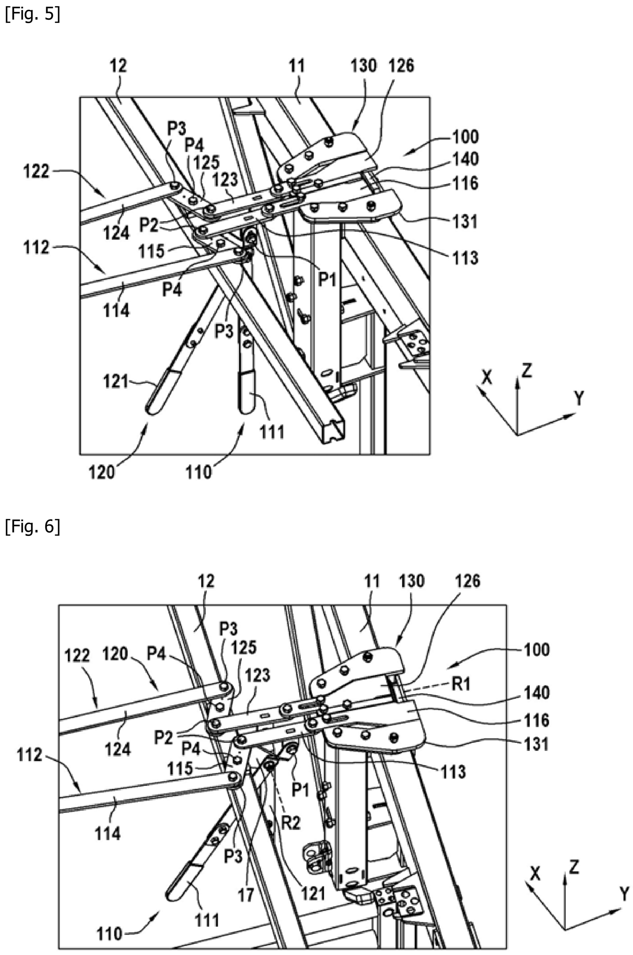

Typiquement, des barres de renforts 16 peuvent être fixées entre le troisième montant longitudinal 13 et les montants verticaux 15. Toutefois, ces éléments structuraux du portique 10 et de l'ensemble 1 n'étant pas l'objet de l'invention, ils ne seront pas détaillés davantage. On notera en outre que les barres de renforts 16 sont masquées sur les figures 5, 6 et 7 pour améliorer la visibilité et faciliter la description du dispositif.

On notera également que les montants transversaux 14 s'étendent chacun dans la direction transversale Y entre les deux premiers montants longitudinaux 11, parallèlement entre eux, et permettent de maintenir les montants longitudinaux 11, 12, 13.

En outre, les montants verticaux 15 s'étendent chacun verticalement dans la direction verticale Z, depuis un premier montant longitudinal 11 vers le sol, mais sans toucher ce dernier, afin de permettre le déplacement du portique 10. La barrière 20 s'étend entre les deux montants verticaux 15, une extrémité latérale de ladite barrière 20 étant fixée de manière mobile par rapport à l'un des deux montants verticaux 15, afin de pouvoir pivoter par rapport à celui-ci pour passer d'une position fermée à une position ouverte, et inversement. L'extrémité latérale opposée de la barrière 20 est fixée de manière amovible à l'autre des deux montants verticaux 15 dans la position fermée illustrée sur les figures 1 à 4.

Ainsi, l'ensemble des éléments du portique 10 comprenant les montants 11, 12, 13, 14, 15, et la barrière 20, peuvent se déplacer conjointement le long des rails 2 dans la direction longitudinale X, dans un premier sens S2 de déplacement ou dans un deuxième sens S1 de déplacement. Par convention, on considère dans la suite de la description que le premier sens S2 de déplacement est un sens de déplacement « vers l'arrière », et que le deuxième sens S1 de déplacement est un sens de déplacement « vers l'avant ».

L'ensemble 1 comprend également un système de verrouillage 100 s'étendant entre les deux extrémités latérales du portique 10. Le système de verrouillage 100 est fixé au portique 10 et se déplace donc conjointement à celui-ci lors d'un déplacement vers l'avant ou vers l'arrière.

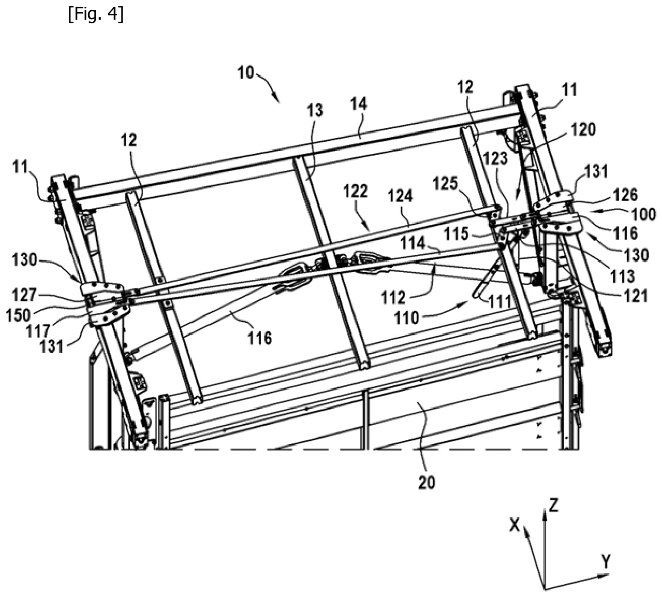

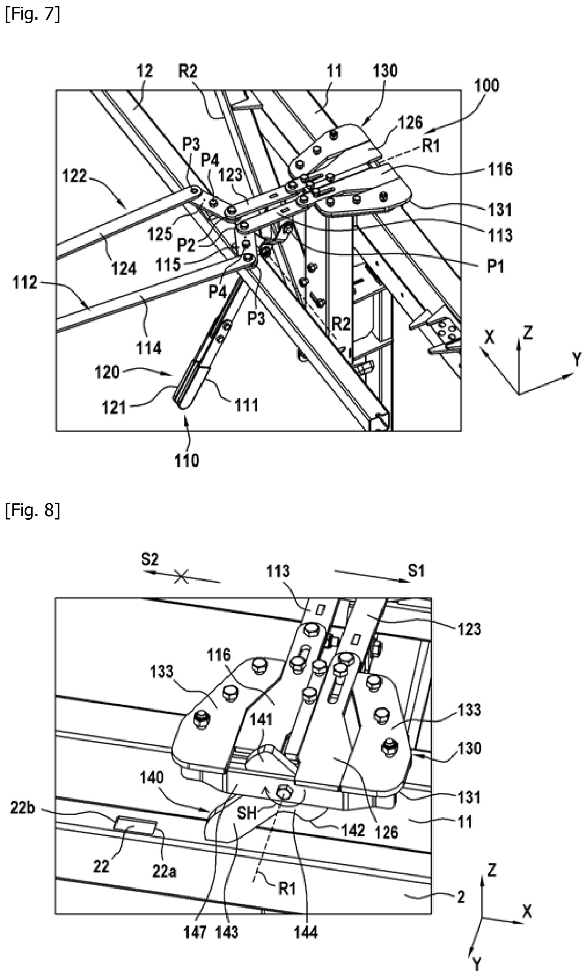

Les figures 4 à 10 représentent en perspective des vues détaillées du système de verrouillage 100, sous des angles différents. La figure 4 représente une portion du portique 10 de la figure 2, dans laquelle une partie d'un support fixe 130 décrit ci-après est masquée. Sur les figures 5 à 7, représentant une vue détaillée d'une extrémité latérale du système de verrouillage 100, le système de verrouillage 100 est observé depuis l'intérieur de l'ensemble 1, c'est-à-dire depuis l'intérieur du couloir de contention, vers l'extérieur. Les figures 8 à 10 représentent la même extrémité du système de verrouillage 100, observée depuis l'extérieur de l'ensemble 1, vers l'intérieur.

Le système de verrouillage 100 comprend un cliquet à chacune de ses extrémités latérales, dans la direction transversale Y. Plus précisément, un premier cliquet 140 est fixé au premier montant longitudinal 11, sur une face latérale extérieure de celui-ci, et de manière mobile par rapport à celui-ci. Plus précisément, le cliquet 140 est mobile en rotation par rapport au premier montant longitudinal 11, et peut pivoter autour d'un premier axe de rotation R1, qui est de préférence perpendiculaire à la direction longitudinale X et parallèle à la direction transversale Y.

Un deuxième cliquet 150 est fixé au premier montant longitudinal 11 opposé, de manière mobile par rapport à celui-ci autour du premier axe de rotation R1. La description qui suit est faite en référence au premier cliquet 140, mais on comprendra que les caractéristiques de deuxième cliquet 150, et sa coopération avec le deuxième rail 2, sont identiques à celles du premier cliquet 140.

Un étrier 147 peut être fixé au premier montant longitudinal 11 de manière à maintenir le premier cliquet 140 (ci-après nommé plus simplement « le cliquet 140 ») en position, le cliquet 140 étant alors disposé entre le premier montant longitudinal 11 et l'étrier 147, ce qui permet de limiter un déplacement du cliquet 140 dans la direction transversale Y.

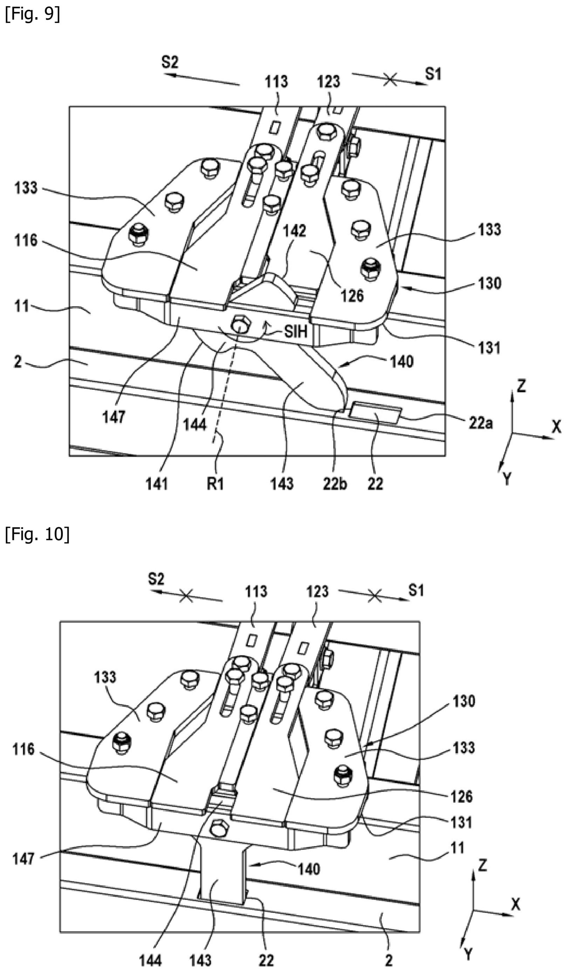

Le cliquet 140 comprend une portion amincie 143, et une portion élargie 144 qui est plus large que la portion amincie 143, la largeur étant définie dans la direction longitudinale X. La portion amincie 143 est dimensionnée de manière à pouvoir pénétrer dans les orifices 22 du rail 2, lorsque le cliquet 140 se trouve en vis-à-vis d'un des orifices 22 au cours du déplacement du portique 10, correspondant à la configuration représentée sur la figure 10.

La portion élargie 144 constitue la partie supérieure du cliquet 140, et définie deux saillies longitudinales du cliquet 140, notamment un premier rebord 141 longitudinal et un deuxième rebord 142 longitudinal. Dans cet exemple, le premier rebord 141 est une portion du cliquet 140 faisant saillie vers l'arrière dans la direction longitudinale, et le deuxième rebord 142 est une portion du cliquet 140 faisant saillie dans la direction opposée, vers l'avant dans la direction longitudinale X.

Le système de verrouillage 100 comprend en outre un premier levier d'actionnement 110 et un deuxième levier d'actionnement 120, fixés au portique 10 de manière mobile. Les caractéristiques du premier levier d'actionnement 110 et du deuxième levier d'actionnement 120 sont identiques et seront décrites ci-dessous conjointement, en décrivant « le levier d'actionnement 110, 120 ». On comprend ainsi que les caractéristiques décrites ci-dessous s'appliquent aux deux leviers d'actionnement 110, 120.

Le levier d'actionnement 110, 120 comprend une portion d'actionnement manuel 111, 121 s'étendant sensiblement dans la direction verticale Z, ou de manière inclinée par rapport à la direction vertical Z selon leur position. Le levier d'actionnement 110, 120 comprend également une portion transversale 112, 122 s'étendant sensiblement selon la direction transversale Y, et comprenant elle-même un premier bras de blocage 113, 123, un deuxième bras de blocage 114, 124, et un bras intermédiaire 115, 125 reliant le premier bras de blocage 113, 123 et le deuxième bras de blocage 114, 124.

La portion transversale 112, 122 s'étend ainsi sur toute la largeur du portique 10, de manière à coopérer à la fois avec le premier cliquet 140 et le deuxième cliquet 150 de la manière décrite ci-après.

La portion d'actionnement manuel 111, 121 est fixée de manière mobile au portique 10, par exemple par l'intermédiaire d'une ailette 17 (figure 3 et figure 6) faisant saillie depuis le deuxième montant longitudinal 12. La portion d'actionnement manuel 111, 121 est ainsi apte à pivoter par rapport à l'ailette 17, et donc par rapport au portique 10, autour d'un deuxième axe de rotation R2 transversal, de préférence perpendiculaire, au premier axe de rotation R1 des cliquets 140, 150.

En outre, la portion d'actionnement manuel 111, 121 est fixée à la portion transversale 112, 122, plus précisément au premier bras de blocage 113, 123, via une première liaison pivot P1, l'axe de la première liaison pivot P1 étant typiquement parallèle au deuxième axe de rotation R2, et donc à la direction longitudinale X.

Une première extrémité du premier bras de blocage 113, 123 est fixée de manière mobile à une première extrémité du bras intermédiaire 115, 125 via une deuxième liaison pivot P2, l'axe de la deuxième liaison pivot P2 étant typiquement perpendiculaire au deuxième axe de rotation R2 et parallèle à la direction verticale Z.

Une deuxième extrémité du bras intermédiaire 115, 125 est fixée de manière mobile à une première extrémité du deuxième bras de blocage 114, 124 via une troisième liaison pivot P3, l'axe de la troisième liaison pivot P3 étant typiquement perpendiculaire au deuxième axe de rotation R2 et parallèle à la direction verticale Z.

De plus, le bras intermédiaire 115, 125 est fixée de manière mobile, de préférence en son centre, au deuxième montant longitudinal 12 via une quatrième liaison pivot P4, l'axe de la quatrième liaison pivot P4 étant typiquement perpendiculaire au deuxième axe de rotation R2 et parallèle à la direction verticale Z. Ainsi, les axes respectifs des liaisons pivots P2, P3, P4 sont parallèles entre eux.

On comprend ainsi que la portion d'actionnement manuel 111, 121 et la portion transversale 112, 122 sont chacune fixées au même deuxième montant longitudinal 12 du portique 10, ledit deuxième montant longitudinal 12 étant disposé plus proche d'une des extrémités latérales du portique 10, à savoir l'extrémité où se trouve le premier cliquet 140 dans cet exemple.

Par conséquent, le premier bras de blocage 113, 123, coopérant avec le premier cliquet 140, est plus court que le deuxième bras de blocage 114, 124, coopérant avec le deuxième cliquet 150.

On notera que, de préférence, le premier bras de blocage 113, 123 et le deuxième bras de blocage 114, 124 comprennent chacun une extrémité de blocage 116, 126 et 117, 127 respectivement, qui peut être fixée de manière amovible au reste du bras de blocage. Un jeu peut exister entre l'extrémité de blocage 116, 126, 117, 127 et le reste du bras de blocage 113, 123, 114, 124 permettant des mouvements de translation et/ou de rotation de l'extrémité de blocage 116, 126, 117, 127 de faibles amplitudes.

Cela permet de faciliter les mouvements du levier d'actionnement 110, 120 et le déplacement du premier bras de blocage 113, 123 et du deuxième bras de blocage 114, 124. En effet, compte tenu du fait que le premier bras de blocage 113, 123 et le deuxième bras de blocage 114, 124 sont reliés entre eux par l'intermédiaire du bras intermédiaire 115, 125, un décalage axial existe entre ces derniers, de telle sorte que le premier bras de blocage 113, 123 et le deuxième bras de blocage 114, 124 ne sont pas parfaitement alignés entre eux et avec la direction transversale Y.

Ce désaxage est d'autant plus marqué pour le deuxième bras de blocage 114, 124, qui présente une longueur plus importante et dont la première extrémité fixée au bras intermédiaire 115, 125 présente un décalage axial plus important que la première extrémité du premier bras de blocage 113, 123.

Le jeu existant entre l'extrémité de blocage 116, 126, 117, 127 et le reste du bras de blocage permet ainsi de compenser ce désaxage et de transformer le déplacement du bras de blocage 113, 123, 114, 124, combinant translation et rotation du fait de la rotation du bras intermédiaire 115, 125 formant un bras de levier, en mouvement de translation pure dans la direction transversale Y. On notera que ce mouvement est également facilité par les entretoises 133 décrites ci-après et servant de guide.

Par ailleurs, l'extrémité de blocage 116, 126 est évasée par rapport au reste du bras de blocage 113, 114, de manière à recouvrir une surface plus grande de la portion élargie 144 du cliquet. On notera à cet égard que les entretoises 133 peuvent présenter une forme complémentaire à celle de l'extrémité de blocage 116, 126, permettant d'améliorer le guidage de celle-ci lors de son déplacement dans la direction transversale Y.

Par ailleurs, outre la fixation au deuxième montant longitudinal 12 par l'intermédiaire du bras intermédiaire 115, 125, la portion transversale 112, 122 est également solidaire des premiers montants longitudinaux 11 par l'intermédiaire d'un support fixe 130. Plus précisément, la portion transversale 112, 122 est fixée de manière mobile à deux supports fixes 130, chacun des supports fixes 130 étant eux-mêmes fixés de manière immobile à chacun des premiers montants longitudinaux 11.

Chaque support fixe 130 comprend une base 131 présentant la forme d'une plaque fixée, par exemple par soudage ou vissage, au premier montant longitudinal 11.

Le support fixe 130 comprend en outre une plaque de maintien 132 (figure 2), typiquement une plaque de forme équivalente à la base 131, et étant fixée sur ladite base 131 au-dessus de celle-ci, par l'intermédiaire des entretoises 133. Les entretoises 133 sont disposées entre la base 131 et la plaque de maintien 132 de manière à laisser un espace suffisant entre ces dernières, pour permettre le passage et le déplacement du premier bras de blocage 113, 123, et notamment de l'extrémité de blocage 116, 126.

La plaque de maintien 132 permet d'améliorer la tenue du premier bras de blocage 113, 123 dont l'extrémité de blocage 116, 126 est confinée entre la base 131 et la plaque de maintien 132. Elle permet en particulier de limiter les mouvements ascendants de l'extrémité de blocage 116, 126, et donc d'améliorer le blocage de la rotation du cliquet 140, 150 dans l'un ou l'autre des sens de rotation du cliquet, en fonction de la position du levier d'actionnement 110, 120, comme cela sera décrit plus en détails ci-après. La plaque de maintien 132 permet donc d'améliorer l'efficacité du système de verrouillage 100.

On notera cependant que la plaque de maintien 132 est masquée sur les figures 4 à 10, afin de visualiser le positionnement et le mouvement de l'extrémité de blocage 116, 117, 126, 127.

Compte tenu de l'agencement décrit ci-dessus, le levier d'actionnement 110, 120 est apte à être disposé dans différentes positions, typiquement deux positions distinctes, en passant de l'une à l'autre des positions par rotation autour du deuxième axe de rotation R2.

Pour ce faire, la portion d'actionnement manuel 111, 121, accessible manuellement par un utilisateur, peut être actionnée par ce dernier, entrainant sa rotation autour du deuxième axe de rotation R2. Cette rotation entraîne une translation dans la direction transversale Y du premier bras de blocage 113, 123, lié à la portion d'actionnement manuel 111, 121 via la première liaison pivot P1.

La translation dans la direction transversale Y du premier bras de blocage 113, 123 provoque elle-même, via la deuxième liaison pivot P2, la rotation du bras intermédiaire 115, 125 sur lui-même autour de son centre et par rapport au même deuxième montant longitudinal 12, via la quatrième liaison pivot P4.

La rotation du bras intermédiaire 115, 125 entraîne elle-même, via la troisième liaison pivot P3, le déplacement du deuxième bras de blocage 114, 124, par translation dans la direction transversale Y.

Ainsi, selon le sens d'actionnement de la portion d'actionnement manuel 111, 121, un déplacement du premier bras de blocage 113, 123 vers l'extérieur dans la direction transversale Y, entraîne par réaction un déplacement conjoint du deuxième bras de blocage 114, 124 vers l'extérieur, par l'intermédiaire du bras intermédiaire 115, 125 tournant dans un premier sens de rotation, impliquant un éloignement du premier bras de blocage 113, 123 et du deuxième bras de blocage 114, 124 l'un de l'autre.

De la même façon, un déplacement du premier bras de blocage 113, 123 vers l'intérieur dans la direction transversale Y, entraîne par réaction un déplacement conjoint du deuxième bras de blocage 114, 124 vers l'intérieur, par l'intermédiaire du bras intermédiaire 115, 125 tournant dans un deuxième sens de rotation opposé au premier sens de rotation, impliquant un rapprochement du premier bras de blocage 113, 123 et du deuxième bras de blocage 114, 124 l'un avec l'autre.

En d'autres termes, un seul actionnement de la portion d'actionnement manuel 111, 121 permet d'agir conjointement sur les deux extrémités du système de verrouillage 100 et du portique 10. Cela permet d'améliorer l'efficacité du système de verrouillage, et sa simplicité d'utilisation pour l'éleveur, qui peut agir en un seul mouvement sur les deux cliquets 140, 150 disposés aux deux extrémités latérales opposées du portique 10.

Chacun du premier levier d'actionnement 110 et du deuxième levier 120 peut ainsi être disposé dans une première position ou une deuxième position.

Lorsque le premier levier d'actionnement 110 est dans sa première position (figures 4, 6 et 9 par exemple), la portion d'actionnement manuel 111 est dans un état relevé en étant inclinée par rapport à la direction verticale Z, et le premier bras de blocage 113 et le deuxième bras de blocage 114 sont dans une position de blocage du premier cliquet 140 et du deuxième cliquet 150 respectivement.

Ainsi, lorsque le premier levier d'actionnement 110 est dans sa première position (figures 4, 6, 7, 9 et 10), le premier bras de blocage 113 et le deuxième bras de blocage 114 sont décalés vers l'extérieur, de telle sorte que l'extrémité de blocage 116, 117 se trouve verticalement au-dessus du premier rebord 141 longitudinal du cliquet 140, 150.

Le premier rebord 141 longitudinal du premier cliquet 140 étant recouvert par l'extrémité de blocage 116, la rotation du premier cliquet 140 dans le sens horaire SH est bloquée par ladite extrémité de blocage 116.

A l'inverse, lorsque le premier levier d'actionnement 110 est dans sa deuxième position (figures 5 et 8), la portion d'actionnement manuel 111 est dans un état rabaissé, sensiblement parallèle à la direction verticale Z, et le premier bras de blocage 113 et le deuxième bras de blocage 114 sont dans une position de libération du premier cliquet 140 et du deuxième cliquet 150 respectivement.

Ainsi, lorsque le premier levier d'actionnement 110 est dans sa deuxième position, le premier bras de blocage 113 et le deuxième bras de blocage 114 sont ramenés vers l'intérieur, de telle sorte que l'extrémité de blocage 116, 117 n'est plus verticalement au-dessus du premier rebord 141 longitudinal du cliquet 140, 150, ledit premier rebord n'étant donc plus recouvert et par conséquent libre de pivoter dans le sens horaire SH (figure 8).

La description ci-dessus s'applique également au deuxième levier d'actionnement 120, qui est mobile entre une première position et une deuxième position.

Plus précisément, lorsque le deuxième levier d'actionnement 120 est dans sa première position (figures 5, 7, 8 et 10), la portion d'actionnement manuel 121 est dans un état relevé en étant inclinée par rapport à la direction verticale Z, et le premier bras de blocage 123 et le deuxième bras de blocage 124 sont dans une position de blocage du premier cliquet 140 et du deuxième cliquet 150 respectivement.

Ainsi, lorsque le deuxième levier d'actionnement 120 est dans sa première position (figures 5, 7, 8 et 10), le premier bras de blocage 123 et le deuxième bras de blocage 124 sont décalés vers l'extérieur, de telle sorte que l'extrémité de blocage 126, 127 se trouve verticalement au-dessus du deuxième rebord 142 longitudinal du cliquet 140, 150.

Le deuxième rebord 142 longitudinal du premier cliquet 140 étant recouvert par l'extrémité de blocage 126, la rotation du premier cliquet 140 dans le sens antihoraire SIH (pour « Sens Inverse Horaire ») est bloquée par ladite extrémité de blocage 126.

A l'inverse, lorsque le deuxième levier d'actionnement 120 est dans sa deuxième position (figures 4, 6 et 9), la portion d'actionnement manuel 121 est dans un état rabaissé, sensiblement parallèle à la direction verticale Z, et le premier bras de blocage 123 et le deuxième bras de blocage 124 sont dans une position de libération du premier cliquet 140 et du deuxième cliquet 150 respectivement.

Ainsi, lorsque le deuxième levier d'actionnement 120 est dans sa deuxième position, le premier bras de blocage 123 et le deuxième bras de blocage 124 sont ramenés vers l'intérieur, de telle sorte que l'extrémité de blocage 126, 127 n'est plus verticalement au-dessus du deuxième rebord 142 longitudinal du cliquet 140, 150, ledit deuxième rebord n'étant donc plus recouvert et par conséquent libre de pivoter dans le sens antihoraire SIH (figure 9).

L'actionnement sélectif du premier levier d'actionnement 110 et du deuxième levier d'actionnement 120 permet ainsi différentes configurations.

Lorsque le premier levier d'actionnement 110 est dans sa première position, et que le deuxième levier d'actionnement 120 est dans sa deuxième position (figures 6 et 9), cela permet un déplacement du portique 10 et de la barrière 20 le long des rails 2 dans le sens S2 vers l'arrière, et de bloquer ce déplacement dans le sens S1 vers l'avant (ce blocage est symbolisé dans la figure 9 par une croix sur le sens S1).

On comprend en effet que dans cette première configuration, lors d'un mouvement de rotation du premier cliquet 140 (par exemple) dans un premier sens de rotation, ici dans le sens horaire SH, le premier rebord 141 de la portion élargie 144 entre en contact avec l'extrémité de blocage 116 du premier levier d'actionnement 110 et se trouve donc bloqué par ladite extrémité de blocage 116 lors de son mouvement de bascule vers l'avant, ce qui bloque ainsi le cliquet 140 dans son mouvement de rotation dans le sens horaire SH.

A l'inverse, lors d'un mouvement de rotation du premier cliquet 140 dans un deuxième sens de rotation, ici dans le sens horaire SIH, le deuxième rebord 142 de la portion élargie 144 n'étant pas recouvert par l'extrémité de blocage 126 deuxième levier d'actionnement 120 est libre de basculer vers l'arrière sans que le premier cliquet 140 ne se retrouve bloqué.

En outre, lorsque le premier levier d'actionnement 110 est dans sa deuxième position, et que le deuxième levier d'actionnement 120 est dans sa première position (figures 5 et 8), cela permet un déplacement du portique 10 et de la barrière 20 le long des rails 2 dans le sens S1 vers l'avant, et de bloquer ce déplacement dans le sens S2 vers l'arrière (ce blocage est symbolisé dans la figure 8 par une croix sur le sens S2).

On comprend en effet que dans cette deuxième configuration, lors d'un mouvement de rotation du premier cliquet 140 (par exemple) dans le premier sens de rotation, ici dans le sens horaire SH, le premier rebord 141 de la portion élargie 144 n'étant pas recouvert par l'extrémité de blocage 116 du premier levier d'actionnement 110 est libre de basculer vers l'avant sans que le premier cliquet 140 ne se retrouve bloqué.

A l'inverse, lors d'un mouvement de rotation du premier cliquet 140 dans un deuxième sens de rotation, ici dans le sens horaire SIH, le deuxième rebord 142 de la portion élargie 144 entre en contact avec l'extrémité de blocage 126 deuxième levier d'actionnement 120 et se trouve donc bloqué par ladite extrémité de blocage 126 lors de son mouvement de bascule vers l'arrière, ce qui bloque ainsi le cliquet 140 dans son mouvement de rotation dans le sens antihoraire SIH.

On notera que cette description s'applique également au deuxième cliquet 150, les sens de rotation étant simplement inversés, le premier sens de rotation de rotation étant le sens horaire SH et le deuxième sens de rotation étant le sens antihoraire SIH, lorsque le deuxième cliquet 150 est observé depuis l'extérieur du portique 10.

Par ailleurs, une troisième configuration, dans laquelle le premier et le deuxième levier d'actionnement 110, 120 sont tous les deux dans leur première position (figures 7 et 10), permet de bloquer un déplacement du portique 10 et de la barrière 20 le long des rails 2 à la fois dans le sens S1 vers l'avant et dans le sens S2 vers l'arrière (ce blocage est symbolisé dans la figure 10 par une croix sur les sens S1 et S2).

Enfin, une quatrième configuration (non représentée), dans laquelle le premier et le deuxième levier d'actionnement 110, 120 sont tous les deux dans leur deuxième position, permet un déplacement libre du portique 10 et de la barrière 20 le long des rails 2 à la fois dans le sens S1 vers l'avant et dans le sens S2 vers l'arrière.

Un procédé de verrouillage d'une barrière agricole 20, utilisant un système de verrouillage 100 décrit ci-dessus, va ensuite être décrit dans la suite de la description.

On considère une situation initiale dans laquelle le premier et le deuxième levier d'actionnement 110, 120 sont dans leur première position (figure 7).

Le procédé comprend alors le positionnement du deuxième levier d'actionnement 120 dans sa deuxième position, en abaissant la portion d'actionnement manuel 121 vers le bas (figure 6). Le premier levier d'actionnement 110 est laissé dans sa première position.

Cette configuration permet un déplacement de la structure agricole mobile 20 le long des rails 2 dans la direction longitudinale X dans un premier sens de déplacement (ici le sens S2), et de bloquer son déplacement dans un deuxième sens de déplacement (ici le sens S1) opposé au premier sens.

Dans cette configuration, lorsque le portique 10, et donc la barrière 20, se déplace vers l'arrière le long des rails 2 dans le sens S2, une extrémité de la portion amincie 143 du premier cliquet 140 (les mêmes caractéristiques s'appliquent au deuxième cliquet 150) glisse le long du rail 2, le cliquet 140 étant alors basculé vers l'arrière dans le sens antihoraire SIH (figure 9).

Lorsque, au cours du déplacement dans le sens S2, le cliquet 140 se retrouve verticalement au droit d'un orifice 22 du rail 2, la portion amincie 143 tombe dans l'orifice 22 en pénétrant dans ce dernier. A ce stade, le portique 10 peut néanmoins poursuivre son déplacement dans le sens S2. En effet, le rebord arrière 22b de l'orifice 22, formant butée pour la portion amincie 143, va entrainer par effet levier la bascule du cliquet 140 vers l'arrière par rotation autour du premier axe de rotation R1 dans le sens antihoraire SIH.

Une telle bascule est possible par le fait que le deuxième rebord 142 de la portion élargie 144 du cliquet 140 n'est pas bloqué par l'extrémité de blocage 126 du deuxième levier d'actionnement 120 dans sa deuxième position, comme décrit précédemment. La portion amincie 143 peut alors sortir de l'orifice 22 et le portique 10 peut ainsi poursuivre de la même manière son déplacement dans le sens S2 jusqu'au prochain orifice 22, et ainsi de suite.

En revanche, à partir de la position dans laquelle la portion amincie 143 est insérée dans l'orifice 22, le portique 10 ne peut pas entamer un déplacement dans le sens opposé S1. En effet, le rebord avant 22a de l'orifice 22, formant butée pour la portion amincie 143, va tendre à faire basculer par effet levier le cliquet 140 vers l'avant, par rotation autour du premier axe de rotation R1 dans le sens horaire SH. Toutefois, une telle bascule est entravée par le fait le premier rebord 141 de la portion élargie 144 du cliquet 140 est bloqué par l'extrémité de blocage 116 du premier levier d'actionnement 110 dans sa première position, comme décrit précédemment.

Plus précisément, au cours de la rotation du premier cliquet 140 dans le sens horaire SH, le premier rebord 141 de la portion élargie 144 du premier cliquet 140 vient en contact et en butée contre l'extrémité de blocage 116 qui se trouve au-dessus, empêchant le premier cliquet 140 de poursuivre son mouvement de rotation dans le sens horaire SH.

On notera qu'en l'absence de la plaque de maintien 132 décrite précédemment, un effort suffisamment important exercé sur le portique 10 dans le sens S1, de manière à forcer la rotation du premier cliquet 140 dans le sens horaire SH, pourrait entrainer un déplacement ascendant de l'extrémité de blocage 116 par déformation élastique. On comprend donc que la plaque de maintien 132 permet de limiter ce risque.

La portion amincie 143 étant bloquée par le rebord avant 22a de l'orifice 22, et le premier rebord 141 étant bloqué par l'extrémité de blocage 116, empêchant la rotation du premier cliquet 140 dans le sens horaire SH, il est difficile voire impossible d'extraire la portion amincie 143 de l'orifice 22 en poussant la barrière 20 vers l'avant, ce qui empêche ainsi une translation du portique 10 dans le sens S1.

On notera néanmoins que lorsque le premier cliquet 140 n'est pas inséré dans un orifice 22, comme représenté sur la figure 9, un déplacement du portique 10 et de la barrière 20 dans le sens S1 reste possible jusqu'à ce que le cliquet 140 se trouve verticalement au-dessus de l'orifice 22 suivant. Dans ce cas, la portion amincie 143 tombe dans ledit orifice 22, ce qui entraine le verrouillage de la barrière 20 dans le sens S1, par le mécanisme décrit ci-dessus. Il est donc préférable de prévoir un nombre et une densité d'orifices 22 élevés le long des rails 2, par exemple tous les 30 cm maximum, de préférence tous les 20 cm maximum, de manière à limiter la course de la barrière 20.

Par ailleurs, à partir de la position dans laquelle la portion amincie 143 est insérée dans l'orifice 22, il est possible de modifier la position des leviers d'actionnement 110, 120, en positionnant le premier levier d'actionnement 110 dans sa deuxième position et le deuxième levier d'actionnement 120 dans sa première position (figures 5 et 8).

Pour ce faire, l'actionnement du premier levier 110 comprend le fait de rabaisser la portion d'actionnement manuel 111 dans un sens, c'est à dire vers le bas, et de remonter la portion d'actionnement manuel 121 dans un sens opposé, c'est-à-dire vers le haut (figure 5).

Par cette action, les extrémités de blocage 116, 117 du premier levier d'actionnement 110 se décalent vers l'intérieur dans la direction transversale Y, libérant ainsi le premier rebord des cliquets 140, 150. A l'inverse, les extrémités de blocage 126, 127 du deuxième levier d'actionnement 120 se décalent vers l'extérieur dans la direction transversale Y, de manière à recouvrir le deuxième rebord des cliquets 140, 150, rendant possible un déplacement du portique 10 vers l'avant dans le sens S1, et empêchant un déplacement du portique 10 vers l'arrière dans le sens S2.

En effet, le rebord avant 22a de l'orifice 22, formant butée pour la portion amincie 143, va entrainer par effet levier la bascule du cliquet 140 vers l'avant par rotation autour du premier axe de rotation R1 dans le sens horaire SH. Une telle bascule est possible par le fait que le premier rebord 141 de la portion élargie 144 du cliquet 140 n'est pas bloqué par l'extrémité de blocage 116 du premier levier 110 dans sa deuxième position, comme décrit précédemment. La portion amincie 143 peut alors sortir de l'orifice 22 et le portique 10 peut ainsi poursuivre son déplacement dans le sens S1 jusqu'au prochain orifice 22, et ainsi de suite.

En revanche, à partir de la position dans laquelle la portion amincie 143 est insérée dans l'orifice 22, le portique 10 ne peut pas entamer un déplacement dans le sens S2. En effet, le rebord arrière 22b de l'orifice 22, formant butée pour la portion amincie 143, va tendre à faire basculer par effet levier le cliquet 140 vers l'arrière par rotation autour du premier axe de rotation R1 dans le sens antihoraire SIH. Toutefois, une telle bascule est entravée par le fait que le deuxième rebord 142 de la portion élargie 144 du cliquet 140 est bloqué par l'extrémité de blocage 126 du deuxième levier 120 dans sa première position, comme décrit précédemment.

Plus précisément, au cours de la rotation du premier cliquet 140 dans le sens antihoraire SIH, le deuxième rebord 142 de la portion élargie 144 du premier cliquet 140 vient en contact et en butée contre l'extrémité de blocage 126 du deuxième levier 120 qui se trouve au-dessus, empêchant le premier cliquet 140 de poursuivre son mouvement de rotation dans le sens antihoraire SIH.

La portion amincie 143 étant bloquée par le rebord arrière 22b de l'orifice 22, et le deuxième rebord 142 étant bloqué par l'extrémité de blocage 126, empêchant la rotation du premier cliquet 140 dans le sens antihoraire SIH, il est difficile voire impossible d'extraire la portion amincie 143 de l'orifice 22 en tirant la barrière 20 vers l'arrière, ce qui empêche ainsi une translation du portique 10 dans le sens S2.

On notera néanmoins comme précédemment que lorsque le cliquet 140 n'est pas inséré dans un orifice 22, comme représenté sur la figure 8, un déplacement du portique 10 et de la barrière 20 dans le sens S2 reste possible jusqu'à ce que le cliquet 140 se trouve verticalement au-dessus de l'orifice 22 suivant. Dans ce cas, la portion amincie 143 tombe dans ledit orifice 22, ce qui entraine le verrouillage de la barrière 20 dans le sens S2, par le mécanisme décrit ci-dessus.

Enfin, à partir de la position dans laquelle la portion amincie 143 est insérée dans l'orifice 22, il est possible de modifier la position des leviers d'actionnement 110, 120, en les plaçant chacun dans leur première position (figures 7 et 10), de manière à bloquer le déplacement de la structure agricole mobile 20 le long des rails 2 dans les deux sens S1 et S2.

Pour ce faire, les leviers d'actionnement manuel 111, 121 sont placés dans leur position relevée, de manière à ce que les extrémités de blocages 116, 117 du premier levier 110 recouvrent le premier rebord des cliquets 140, 150, et à ce que les extrémités de blocages 126, 127 du deuxième levier 120 recouvrent le deuxième rebord des cliquets 140, 150, empêchant ainsi un déplacement du portique 10 à la fois vers l'avant dans le sens S1, et vers l'arrière dans le sens S2, par les mécanismes de blocage décrit plus haut.

Par le système de verrouillage 100 et le procédé qui en découle, décrits ci-dessus, il est possible de sélectionner de manière simple le sens de verrouillage de la barrière 20, par une simple action sur les leviers d'actionnement 110, 120, permettant d'agir en un mouvement sur les deux cliquets 140, 150 placés aux extrémités latérales du portique 10, et permettant également un verrouillage et une utilisation en continu.

En effet, lorsque le premier levier d'actionnement est dans sa deuxième position, et le deuxième levier d'actionnement 120 est dans sa première position, l'éleveur peut déplacer la barrière 20 vers l'avant en la poussant dans le sens S1, sans se soucier de verrouiller la barrière 20 par palier pour éviter un déplacement non souhaité de celle-ci dans le sens opposé S2, un tel verrouillage dans le sens S2 étant automatique à chaque palier, c'est-à-dire à chaque orifice 22. Il n'est en outre pas nécessaire de déverrouiller les cliquets 140, 150 à chaque palier pour pouvoir continuer à déplacer la barrière 20 dans le sens S1 (comme cela serait le cas par exemple avec un système de ressort de rappel poussant un taquet dans chaque orifice 22 au cours du déplacement), ce qui permet un déplacement en continu.

De même, une simple action sur les leviers 110, 120 permet d'inverser le sens de verrouillage de la barrière 20. En effet, lorsque le premier levier d'actionnement 110 est dans sa première position, et le deuxième levier d'actionnement 120 est dans sa deuxième position, l'éleveur peut déplacer la barrière 20 vers l'arrière en la tirant dans le sens S2, sans se soucier de verrouiller la barrière 20 par palier pour éviter un déplacement non souhaité de celle-ci dans le sens opposé S1, un tel verrouillage par palier étant automatique à chaque orifice 22.

L'éleveur peut donc pousser la barrière 22 vers l'avant, ou la tirer vers l'arrière en toute sécurité, tout en ayant ses deux mains libres pour pouvoir à la fois pousser (ou tirer) la barrière 120 et agir sur les animaux présents de l'autre côté de la barrière 20. Le système de verrouillage 100 permet ainsi d'améliorer la sécurité de l'éleveur, tout en permettant une utilisation pratique et efficace.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système de verrouillage (100) pour structure agricole mobile (20) apte à se déplacer dans une direction longitudinale (X) le long d'au moins un premier rail (2), le système de verrouillage (100) étant configuré pour être solidaire en déplacement avec la structure agricole mobile (20), et comprenant un premier cliquet (140) apte à coopérer avec des orifices (22) répartis le long du premier rail (2), le premier cliquet (140) étant configuré pour pivoter autour d'un premier axe de rotation (R1), le système de verrouillage (100) comprenant un premier levier d'actionnement (110) mobile entre une première position dans laquelle il est apte à limiter une rotation du premier cliquet (140) dans un premier sens de rotation (SH) et une deuxième position autorisant la rotation du premier cliquet (140) dans le premier sens de rotation (SH), et un deuxième levier d'actionnement (120) mobile entre une première position dans laquelle il est apte à limiter une rotation du premier cliquet (140) dans un deuxième sens de rotation (SIH) et une deuxième position autorisant la rotation du premier cliquet (140) dans le deuxième sens de rotation (SIH).

2. Système de verrouillage (100) selon la revendication 1, dans lequel le premier cliquet (140) comprend un premier rebord (141) longitudinal et un deuxième rebord (142) longitudinal, le premier levier d'actionnement (110) étant apte à limiter la rotation du premier cliquet (140) dans le premier sens de rotation (SH) par contact du premier rebord (141) contre le premier levier d'actionnement (110) lors de la rotation dans le premier sens de rotation (SH), et le deuxième levier d'actionnement (120) étant apte à limiter la rotation du premier cliquet (140) dans le deuxième sens de rotation (SIH) par contact du deuxième rebord (142) contre le deuxième levier d'actionnement (120) lors de la rotation dans le deuxième sens de rotation (SIH).

3. Système de verrouillage (100) selon la revendication 2, dans lequel le premier cliquet (140) comprend une portion amincie (143) apte à pénétrer au moins en partie dans les orifices (22) du premier rail (2), et une portion élargie (144) apte à coopérer avec une extrémité (116) du premier levier d'actionnement (110) et comprenant le premier rebord (141) longitudinal et le deuxième rebord (142) longitudinal.

4. Système de verrouillage (100) selon l'une quelconque des revendications 1 à 3, dans lequel le premier et le deuxième levier d'actionnement (110, 120) sont aptes à être fixés de manière mobile à un portique (10) portant la structure agricole mobile (20), et sont aptes à passer de leur première position à leur deuxième position en pivotant par rapport au portique (10), autour d'un deuxième axe de rotation (R2) transversal au premier axe de rotation (R1) du premier cliquet (140).

5. Système de verrouillage (100) selon l'une quelconque des revendications 1 à 4, comprenant un support fixe (130) comprenant une base (131) fixe apte à être fixée à un premier montant longitudinal (11) du portique (10), et une plaque de maintien (132) fixée à la base (131), une extrémité (116) du premier levier d'actionnement (110) étant logée dans un espace formé entre la plaque de maintien (132) et la base (131), la plaque de maintien (132) étant apte à limiter un mouvement ascendant de l'extrémité (116) du premier levier d'actionnement (110).

6. Système de verrouillage (100) selon l'une quelconque des revendications 1 à 5, apte à se déplacer dans la direction longitudinale (X) à la fois le long du premier rail (2) et le long d'un deuxième rail (2) parallèle au premier rail, le système de verrouillage (100) comprenant un deuxième cliquet (150) apte à coopérer avec des orifices (22) répartis le long du deuxième rail (2), le deuxième cliquet (150) étant configuré pour pivoter autour du premier axe de rotation (R1), le premier levier d'actionnement (110) étant apte à limiter une rotation du deuxième cliquet (150) dans le premier sens de rotation (SH) lorsqu'il est dans sa première position, et à autoriser la rotation du deuxième cliquet (150) dans le premier sens de rotation (SH) lorsqu'il est dans sa deuxième position, et le deuxième levier d'actionnement (120) étant apte à limiter une rotation du deuxième cliquet (150) dans le deuxième sens de rotation (SIH) lorsqu'il est dans sa première position, et à autoriser la rotation du deuxième cliquet (150) dans le deuxième sens de rotation (SIH) lorsqu'il est dans sa deuxième position.

7. Système de verrouillage (100) selon la revendication 6, dans lequel le premier levier et le deuxième levier d'actionnement (110, 120) comprennent chacun une portion d'actionnement manuel (111, 121) et une portion transversale (112, 122) apte à coopérer à la fois avec le premier cliquet (140) et le deuxième cliquet (150) lorsque le premier et/ou le deuxième levier d'actionnement (110, 120) est dans sa première position, la portion d'actionnement manuel (111, 121) étant fixée à la portion transversale (112, 122) via une première liaison pivot (P1).

8. Système de verrouillage (100) selon la revendication 7, dans lequel la portion transversale (112, 122) comprend un premier bras de blocage (113, 123) apte à coopérer avec le premier cliquet (140) lorsque le premier et/ou le deuxième levier d'actionnement (110, 120) est dans sa première position, un deuxième bras de blocage (114, 124) apte à coopérer avec le deuxième cliquet (150) lorsque le premier et/ou le deuxième levier d'actionnement (110, 120) est dans sa première position, le premier et le deuxième bras de blocage étant liés entre eux via un bras intermédiaire (115, 125) fixé à chacun du premier et du deuxième bras de blocage via une deuxième et une troisième liaison pivot (P2, P3) respectivement.

9. Système de verrouillage (100) selon la revendication 8, dans lequel un passage du premier et/ou du deuxième levier d'actionnement (110, 120) de sa première position à sa deuxième position, par un actionnement de la portion d'actionnement manuel (111, 121) dans un premier sens, entraîne un déplacement transversal du premier bras de blocage (113, 123) et du deuxième bras de blocage (114, 124) impliquant un rapprochement de ces derniers l'un de l'autre, et un passage du premier et/ou du deuxième levier d'actionnement (110, 120) de sa deuxième position à sa première position, par un actionnement de la portion d'actionnement manuel (111, 121) dans un deuxième sens opposé au premier sens, entraîne un déplacement transversal du premier bras de blocage (113, 123) et du deuxième bras de blocage (114, 124) impliquant un éloignement de ces derniers l'un de l'autre.

10. Ensemble (1) comprenant deux rails (2) parallèles entre eux, une structure agricole mobile (20), un portique (10) portant la structure agricole mobile (20) et étant mobile en translation le long des rails (2) dans une direction longitudinale (X), et un système de verrouillage (100) selon l'une quelconque des revendications précédentes, le premier cliquet (140) étant fixé de manière mobile en rotation par rapport audit portique (10).

11. Ensemble (1) selon la revendication 10, dans lequel le portique (10) comprend un premier montant longitudinal (11) coopérant avec l'un des deux rails (2) en étant apte à translater par rapport audit rail (2), le premier et le deuxième levier d'actionnement (110, 120) étant fixés de manière mobile à un deuxième montant longitudinal (12) parallèle au premier montant longitudinal (11), une base fixe (131), une plaque de maintien (132) et le premier cliquet (140) étant fixés audit premier montant horizontal (11).

12. Ensemble (1) selon la revendication 11, dans lequel un bras intermédiaire (115, 125) est fixé de manière mobile au deuxième montant longitudinal (12), via une quatrième liaison pivot (P4).

13. Ensemble (1) selon l'une quelconque des revendications 10 à 12, dans lequel la structure agricole mobile (20) est une barrière de poussée de couloir de contention.

14. Procédé de verrouillage d'une structure agricole mobile (20) utilisant un système de verrouillage (100) selon l'une quelconque des revendications 1 à 9, le procédé comprenant :
- le positionnement du premier levier d'actionnement (110) dans sa première position et du deuxième levier d'actionnement (120) dans sa deuxième position de manière à permettre un déplacement de la structure agricole mobile (20) le long du rail (2) dans une direction longitudinale (X), dans un premier sens (S2) de déplacement et à bloquer son déplacement dans un deuxième sens (S1) de déplacement opposé au premier sens (S2), ou
- le positionnement du premier levier d'actionnement (110) dans sa deuxième position et du deuxième levier d'actionnement (120) dans sa première position de manière à permettre le déplacement de la structure agricole mobile (20) le long du rail (2) dans le deuxième sens (S1) de déplacement et à bloquer son déplacement dans le premier sens (S2), ou
- le positionnement du premier levier d'actionnement (110) et du deuxième levier d'actionnement (120) dans leur première position de manière à bloquer le déplacement de la structure agricole mobile (20) le long du rail (2) à la fois dans le premier sens (S2) et dans le deuxième sens (S1).
